# EUROPEAN PATENT SPECIFICATION

(11) **EP 0 396 297 B1**
(45) Date of publication and mention of the grant of the patent: **02.08.1995**
(21) Application number: 90304347.9
(22) Date of filing: 23.04.1990
(51) Int. Cl.: C08F 8/30, C08F 8/34, C10M 149/00

(54) **Dispersant - anti-oxidant additive and lubricating oil composition containing same**
Dispergierende Antioxidationsadditive und diese Additive enthaltende Schmierölzusammensetzungen
Additif dispersant anti-oxydant et composition d'huiles lubrifiantes renfermant cet additif

(30) Priority: 01.05.1989 US 345265
(43) Date of publication of application: 07.11.1990
(73) Proprietor: TEXACO DEVELOPMENT CORPORATION, White Plains, New York 10650 (US); DSM COPOLYMER, Baton Rouge, Louisiana 70805-2044 (US)
(72) Inventor: Benfaremo, Nicholas, Wappingers Falls, N.Y. 12590 (US); Nalesnik, Theodore Eugene, Wappingers Falls, N.Y. 12590 (US)
(74) Representative: Brock, Peter William

(56) References cited:
- EP-A- 0 000 648
- EP-A- 0 002 286
- EP-A- 0 338 672
- US-A- 4 048 080

## Description

This invention relates to a method for preparing a lubricant additive which is effective as a dispersant and an anti-oxidant additive when employed in a lubricating oil composition.

The art contains many disclosures on the use of polymeric additives in lubricating oil compositions. Ethylene-propylene copolymers and ethylene-alpha olefin non-conjugated diene terpolymers some of which have been further derivatized to provide bifunctional properties in lubricating oil compositions illustrate this type of oil additive.

U.S 3,522,180 discloses a method for the preparation of an ethylene-propylene copolymer substrate effective as a viscosity index improver for lubricating oils.

U.S. 4,026,809 discloses graft copolymers of a methacrylate ester and an ethylene-propylene-alkylidene norbornene terpolymer as a viscosity index improver for lubricating oils.

U.S. 4,089,794 discloses ethylene copolymers derived from ethylene and one or more C₃ to C₂₈ alpha olefin solution grafted with an ethylenically-unsaturated carboxylic acid material followed by a reaction with a polyfunctional material reactive with carboxyl groups, such as a polyamine, a polyol, or a hydroxyamine which reaction product is useful as a sludge and varnish control additive in lubricating oils.

U.S. 4,137,185 discloses a stabilized imide graft of an ethylene copolymer additive for lubricants.

U.S. 4,146,489 discloses a graft copolymer where the backbone polymer is an oil-soluble ethylene-propylene copolymer or an ethylene-propylene-diene modified terpolymer with a graft monomer of C-vinylpyridine or N-vinylpyrrolidone to provide a dispersant VI improver for lubricating oils.

U.S. 4,320,019 discloses a multipurpose lubricating additive prepared by the reaction of an interpolymer of ethylene and a C₃ - C₈ alpha-monoolefin with an olefinic carboxylic acid acylating agent to form an acylating reaction intermediate which is then reacted with an amine.

U.S. 4,340,689 discloses a process for grafting a functional organic group onto an ethylene copolymer or an ethylene-propylene-diene terpolymer.

U.S. 4,357,250 discloses a reaction product of a copolymer and an olefin carboxylic acid via the "ene" reaction followed by a reaction with a monoamine-polyamine mixture.

U.S. 4,382,007 discloses a dispersant - VI improver prepared by reacting a polyamine-derived dispersant with an oxidized ethylene-propylene polymer or an ethylene-propylene diene terpolymer.

U.S. 4,144,181 discloses polymer additives for fuels and lubricants comprising a grafted ethylene copolymer reacted with a polyamine, polyol or hydroxyamine and finally reacted with a alkaryl sulfonic acid.

U.S. Patent Nos. 3,172,892 and 4,048,080 disclose alkenylsuccinimides formed from the reaction of an alkenylsuccinic anhydride and an alkylene polyamine and their use as dispersants in a lubricating oil composition.

An object of the invention is to provide a method for preparing a lubricant additive effective for imparting dispersancy and anti-oxidant properties to a lubricating oil composition.

A further object is to provide a novel lubricating oil composition containing the graft and derivatized polymer additive of the invention as well as to provide concentrates of the novel additive of invention.

By means of the method of the invention, a lubricant additive composition can be produced which comprises a polyolefin having a molecular weight ranging from 300 to 3500 which has been acylated with an ethylenically unsaturated carboxylic function and further derivatized with an amino-aromatic polyamine compound. The polyolefin may be a homopolymer, or a copolymer of ethylene with a C₃ to C₁₀ α-mono olefin or terpolymer of a C₂ to C₁₀ alpha-monoolefin and a non-conjugated diene or triene acylated with a carboxylic function and then derivatized with an amino-aromatic polyamine compound from the group consisting of:
a) an N-arylphenylenediamine of the formula: 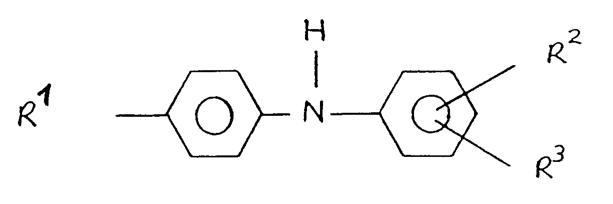 in which R¹ is hydrogen, -NH-aryl, NH-arylalkyl, or a branched or straight chain alkyl, alkenyl, alkoxyl, aralkyl, alkaryl, hydroxyalkyl or aminoalkyl radical having from 4 to 24 carbon atoms; R² is
   NH₂, CH₂-(CH₂)ₙ-NH₂, ⁅NH-(CH₂)ₙ⁆ₘNH₂ or CH₂-aryl-NH₂ in which m and n are each 1 to 10; and R³ is alkyl, alkenyl, alkoxyl, aralkyl or alkaryl having 4 to 24 carbon atoms, or a phenylenediamine selected from N-phenyl - 1,4-phenylene diamine, N-phenyl - 1,3-phenylene diamine or N-phenyl - 1,2-phenylene diamine.
b) an aminothiazole selected from aminothiazole, aminobenzothiazole, aminobenzothiadiazole and aminoalkylthiazole,
c) an aminocarbazole of the formula: 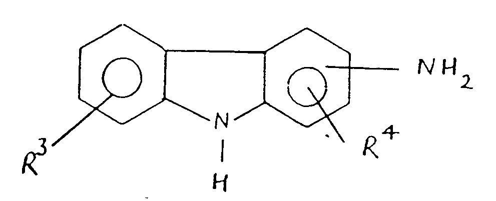 in which R³ and R⁴ are each hydrogen or an alkyl or alkenyl radical having from 1 to 14 carbon atoms,
d) an amino-indazolinone of the formula: 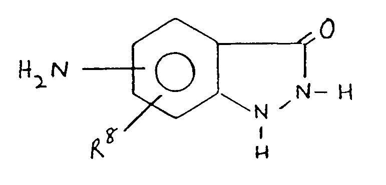 in which R⁸ is hydrogen or alkyl having 1 to 14 carbon atoms;
e) an aminomercaptotriazole of the formula: 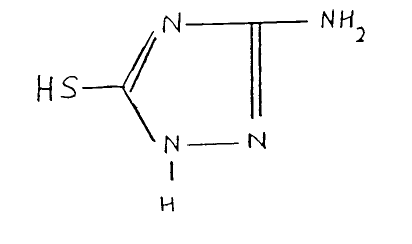 or
f) an aminoperimidine of the formula: 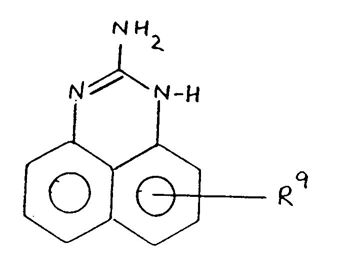 in which R⁹ is hydrogen or an alkyl, alkenyl, or alkoxyl radical having from 1 to 8 carbon atoms.

The novel lubricant of the invention comprises an oil of lubricating viscosity and an effective dispersant amount of the novel reaction product. The lubricating oil will also be characterized by having anti-oxidant properties.

Concentrates of the reaction product of the invention are also contemplated.

The homopolymer or copolymer substrate employed in the novel additive of the invention may be prepared from ethylene, propylene, butylene, isobutylene or generally from an olefin having from two to ten carbon atoms.

More complex polymer substrates, designated as interpolymers, may also be prepared. In this case, another polyene component is used to prepare an interpolymer substrate. Particularly suitable polyene monomers are selected from non-conjugated dienes and trienes. The non-conjugated diene component is one having from 5 to 14 carbon atoms in the chain. Preferably, the diene monomer is characterized by the presence of a vinyl group in its structure and can include cyclic and bi-cyclo compounds. Representative dienes include 1,4-hexadiene, 1,4-cyclohexadiene, dicyclopentadiene, 5-ethylidene-2-norbornene, 5-methylene-2-norborene, 1,5-heptadiene, and 1,6-octadiene. A mixture of more than one diene can be used in the preparation of the interpolymer. A preferred non-conjugated diene for preparing a terpolymer or interpolymer substrate is 1,4-hexadiene.

The triene component will have at least two non-conjugated double bonds, and up to about 30 carbon atoms in the chain. Typical trienes useful in preparing the interpolymer of the invention are 1-isopropylidene-3,4,7,7-tetrahydroindene, 1-isopropylidenedicyclopentadiene, dehydro-isodicyclopentadiene, and 2-(2-methylene-4-methyl-3-pentenyl)[2.2.1] bicyclo-5-heptene.

A preferred homopolymer is polybutylene or still more preferred polyisobutylene having a molecular weight from about 300 to 3500. Polymers having molecular weights from about 1000 to 2500 are more preferred with polymers having molecular weights from about 1200 to 2000 being most preferred. In general, these polymers have outstanding solubility in a lubricating oil base. The prescribed polymers or copolymers do not provide effective viscosity index improving properties to a lubricating oil because of their relatively low molecular weight.

The polymerization reaction to form the polymer substrate may be carried out in the presence of a catalyst in a solvent medium. The polymerization solvent may be any suitable inert organic solvent that is liquid under reaction conditions for solution polymerization of monoolefins which is generally conducted in the presence of a Ziegler type catalyst. Examples of satisfactory hydrocarbon solvents include straight chain paraffins having from 5-8 carbon atoms, with hexane being preferred. Aromatic hydrocarbons, preferably aromatic hydrocarbon having a single benzene nucleus, such as benzene and toluene; and saturated cyclic hydrocarbons having boiling point ranges approximating those of the straight chain paraffinic hydrocarbons and aromatic hydrocarbons described above, are particularly suitable. The solvent selected may be a mixture of one or more of the foregoing hydrocarbons. It is desirable that the solvent be free of substances that will interfere with a Ziegler polymerization reaction.

In a typical preparation of a polymer substrate, hexane is first introduced into a reactor and the temperature in the reactor is raised moderately to about 30°C. Dry propylene is fed to the reactor until the pressure reaches about 135-152 kPa (40-45 inches of mercury). The pressure is then increased to about 202 kPa (60 inches of mercury) and dry ethylene and 5-ethylidene-2-norbornene are fed to the reactor. The monomer feeds are stopped and a mixture of aluminum sesquichloride and vanadium oxytrichloride are added to initiate the polymerization reaction. Completion of the polymerization reaction is evidenced by a drop in the pressure in the reactor.

Homopolymers may be produced from ethylene, propylene, butylene, isobutylene and higher olefins.

Ethylene-propylene or higher alpha monoolefin copolymers may consist of from about 15 to 80 mole percent ethylene and from about 20 to 85 mole percent propylene or higher monoolefin with the preferred mole ratios being from about 25 to 80 mole percent ethylene and from about 20 to 75 mole percent of a C₃ to C₁₀ alpha monoolefin.

Terpolymer variations of the foregoing polymers may contain from about 0.1 to 10 mole percent of a non-conjugated diene or triene.

The polymer substrate is essentially an oil-soluble, substantially linear, viscous liquid having an average molecular weight from 300 to 3500 with a preferred molecular weight range of 1,000 to 2,500 and an especially preferred molecular weight range 1200 to 2000.

The term polymer is used generically to encompass homopolymers, copolymers and terpolymers or interpolymers. These materials may contain minor amounts of other olefinic monomers so long as their basic characteristics are not materially changed.

An ethylenically unsaturated carboxylic acid material is next reacted with the prescribed polymer backbone to produce an acylated reaction product. These materials which are attached to the polymer contain at least one, preferably two, chemically bonded carboxylic acid or acid anhydride group or a polar group which is convertible into said carboxyl groups by oxidation or hydrolysis. Maleic anhydride or a derivative thereof is preferred. It reacts with the homopolymer, copolymer or terpolymer to give two carboxylic acid functionalities. Examples of additional unsaturated carboxylic materials include chlormaleic anhydride, itaconic anhydride, or the corresponding dicarboxylic acids, such as maleic acid, fumaric acid and their monoesters.

The ethylenically unsaturated carboxylic acid material may be attached to the polymer backbone in a number of ways. It may be grafted onto the backbone by a thermal process known as the "ene" process or by grafting in solution or in solid form using a radical initiator. This is the preferred method for polybutene backbones. The free-radical induced grafting of ethylenically unsaturated carboxylic acid materials in solvents, such as benzene is the preferred method for ethylene propylene type poymers. It is carried out at an elevated temperature in the range of about 100°C. to 250°C, preferably 120° to 190°C and more preferably at 150° to 180°C, e.g. above 160°C, neat, or in a solvent. The solvent, preferably a mineral lubricating oil solution containing, e.g. 1 to 50, preferably 5 to 30 wt.%, based on the initial total oil solution, of the ethylene polymer and preferably under an inert environment.

The free-radical initiators which may be used are peroxides, hydroperoxides, and azo compounds and preferably those which have a boiling point greater than about 100°C and decompose thermally within the grafting temperature range to provide free radicals. Representative of these free-radical initiators are azobutyronitrile, -2,5-dimethylhex-3-yne-2,5 bis-tertiary-butyl peroxide and dicumene peroxide. The initiator, when used, is used in an amount of between about 0.005% and about 1% by weight based on the weight of the reaction mixture solution. The grafting is preferably carried out in an inert atmosphere, such as under nitrogen blanketing. The resulting polymer intermediate is characterized by having carboxylic acid acylating functions within its structure.

In the solid or melt process for forming a graft polymer, the unsaturated carboxylic acid with the optional use of a radical initiator is grafted on molten rubber using rubber masticating or shearing equipment. The temperature of the molten material in this process may range from about 150-400 °C.

Polymer substrates or interpolymers are available commercially. Particularly useful are the polybutylenes, and more particularly polyisobutylene. Also useful are the copolymers containing from about 40 to about 80 mole percent ethylene units and about 60 to about 20 mole percent propylene units.

The polymer intermediate possessing carboxylic acid acylating functions is reacted with an amino-aromatic polyamine compound from the group consisting of:
a) an N-arylphenylenediamine of the formula: 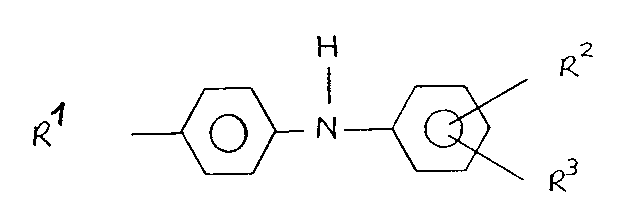 in which R¹ is hydrogen, -NH-aryl, NH-arylalkyl, or a branched or straight chain alkyl, alkenyl, alkoxyl, aralkyl, alkaryl, hydroxyalkyl or aminoalkyl radical having from 4 to 24 carbon atoms; R² is
   NH₂, CH₂-(CH₂)ₙ-NH₂, ⁅NH-(CH₂)ₙ⁆ₘNH₂ or CH₂-aryl-NH₂ in which m and n are each 1 to 10; and R³ is alkyl, alkenyl, alkoxyl, aralkyl or alkaryl having 4 to 24 carbon atoms, or a phenylenediamine selected from N-phenyl - 1,4-phenylene diamine, N-phenyl - 1,3-phenylene diamine or N-phenyl - 1,2-phenylene diamine.
b) an aminothiazole selected from aminothiazole, aminobenzothiazole, aminobenzothiadiazole and aminoalkylthiazole,
c) an aminocarbazole of the formula: 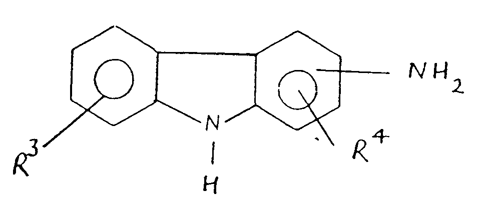 in which R³ and R⁴ are each hydrogen or an alkyl or alkenyl radical having from 1 to 14 carbon atoms,
d) an amino-indazolinone of the formula: 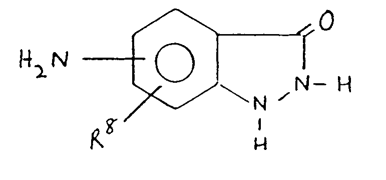 in which R⁸ is hydrogen or alkyl having 1 to 14 carbon atoms;
e) an aminomercaptotriazole of the formula: 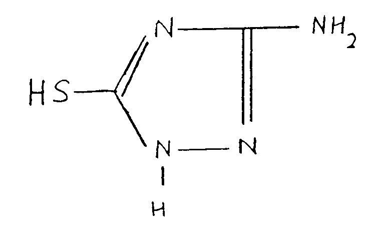 or
f) an aminoperimidine of the formula: 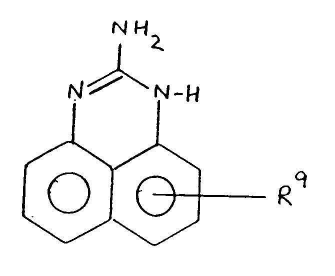 in which R⁹ is hydrogen or an alkyl, alkenyl, or alkoxyl radical having from 1 to 8 carbon atoms.

Particularly preferred N-arylphenylenediames are the N-phenylphenylenediamines, N-Naphthylphenylenediamines and N-phenylnaphthylenediamines for example, N-phenyl-1,4-phenylenediamine, N-phenyl-1,3-phenylenediamine, and N-phenyl-1,2-phenylenediamine.

The reaction between the polymer substrate intermediate having attached thereto a carboxylic acid acylating function and the prescribed amino-aromatic polyamine compound is conducted by heating a solution of the polymer substrate under inert conditions and then adding the amino-aromatic polyamine compound to the heated solution generally with mixing to effect the reaction. It is convenient to employ an oil solution of the polymer substrate heated to 140 to 175°C. while maintaining the solution under a nitrogen blanket. The amino-aromatic polyamine compound is added to this solution and the reaction is effected under the noted conditions. This reaction may be conducted in the presence of other additives in the oil solution.

The following examples illustrate the preparation of the novel reaction product additive of the invention.

### Example I

200 grams (0.081 moles) of a polybuteneyl succinic anhydride prepared from a polybutene of about 1290 molecular weight (Indopol H-300) and maleic anhydride was added to 50 grams of a pale mineral oil having a viscosity of about 100 at 100°C. This mixture was heated to about 60°C under a nitrogen atmosphere. 15 grams (0.081 moles) of N-phenyl-p-phenylenediamine was added to the reaction mixture which was then heated to 120°C. The reaction was continued under these conditions for 3 hours. The reaction product was then cooled to about 80°C and filtered through an inert filtering mineral (Celite). The following table gives typical analyses for this product.

| | |
|---|---|
| %N | 0.87 |
| Specific Gravity (60/60°F) 15/15°C | 0.9189 |
| Flash, COC, (°F) °C | (440) 226 |
| Kinematic Viscosity, cSt 100°C | 143 |

### Example II

200 grams (0.34 moles) of a polybuteneyl succinic anhydride prepared from a polybutene of about 320 molecular weight (Amoco L-14) and maleic anhydride was added to grams of a pale mineral oil having a viscosity of about 100 at 100°C. This mixture was heated to about 60°C under a nitrogen atmosphere. 62 grams (0.34 moles) of N-phenyl-p-phenylenediamine was added to the reaction mixtures which was then heated to 120°C. The reaction was continued under these conditions for about 3 hours and then cooled to about 80°C and filtered as described in Example I. The following table gives typical analyses for this product.

| | |
|---|---|
| %N | 1.44 |
| Specific Gravity (60/60°F) 15/15°C | 0.9587 |
| Flash, COC, (°F) °C | (450) 232 |
| Kinematic Viscosity, cSt 100°C | 97.6 |

### Example III to VIII

Derivatized graft polymers are prepared employing the polymer and procedures shown in Example I employing the following amino-aromatic polyamines
Example III Aminothiazole
Example IV Aminocarbazole
Example V Aminoperimidine
Example VI Aminomercaptotriazole
Example VII N-phenyl-1,3-phenylenediamine
The novel graft and derivatized polymer of the invention are useful as additives in lubricating oils. They are multi-functional additives being effective to provide dispersancy and anti-oxidant properties to lubricating oils. They can be employed in a variety of oils of lubricating viscosity including natural and synthetic lubricating oils and mixtures thereof. The novel additives can be employed in crankcase lubricating oils for spark-ignited and compression-ignited internal combustion engines. The compositions can also be used in gas engines, or turbines, automatic transmission fluids, gear lubricants, metal-working lubricants, hydraulic fluids and other lubricating oil and grease compositions. Their use in motor fuel compositions is also contemplated.

The base oil may be a natural oil including liquid petroleum oils and solvent-treated or acid-treated mineral lubricating oils of the paraffinic, naphthenic and mixed paraffinic-naphthenic types.

The lubricating oil composition of the invention may contain the novel reaction product in a concentration ranging broadly from about 0.05 to 20 weight percent. A preferred concentration range for the additive is from about 1 to 9 weight percent based on the total weight of the oil composition.

Oil concentrates of the additives may contain from about 20 to 90 weight percent of the additive reaction product in a carrier or diluent oil of lubricating oil viscosity.

The novel reaction product of the invention may be employed in lubricant compositions together with conventional lubricant additives. Such additives may include additional dispersants, detergents, anti-oxidants, pour point depressants, anti-wear agents and the like.

The novel additive reaction product of the invention was tested for its effectiveness as a dispersant and as an anti-oxidant in a lubricating oil composition.

The anti-oxidant properties of the reaction product of the invention was determined in the Bench Oxidation Test. In this test, a weighted sample of the reaction product additive is blended into solvent neutral oil (SNO) having an S.U.S. viscosity at 38°C (100°F) of 130. The oil composition is heated to 175°C under a nitrogen blanket. A sample is taken to establish a base line. The oil is maintained at 175°C while a stream of air is passed through it at the rate of 500 ml/minute for six hours. Samples are taken every hour and the DIR of each sample is determined against the base line at 1712 CM-1. The six-hour DIR is used as a measure of oxidation; the smaller the value, the better the antioxidant properties. A six-hour DIR of 1.0 indicates that little or no oxidation has taken place.

**TABLE I**

| BENCH OXIDATION TEST | | | | |
|---|---|---|---|---|
| RUN | TEST MIXTURE (1) | ADDITIVE CONCENTRATION WT.% (2) | %N IN OIL | 6 HR. DIR |
| 1 | Solvent Neutral Oil | NA | NA | 20.17 |
| 5 | Example II | 1.0 | 0.0157 | 11.42 |
| 6 | Example II | 2.0 | 0.0314 | 1.37 |
| 7 | Example II | 3.0 | 0.0471 | 1.40 |
| 2 | Example I | 1.0 | 0.0087 | 20.00 |
| 3 | Example I | 2.0 | 0.0174 | 4.29 |
| 4 | Example I | 3.0 | 0.0261 | 1.14 |

| | | | | |
|---|---|---|---|---|
| 1) Blends contained 0.18% calcium. | | | | |
| 2) Additive used as 50% concentrate in oil. | | | | |

This example demonstrates the substantial improvement in the anti-oxidant properties of oil composition containing the reaction product of the invention.

The dispersancy of the additives was evaluated in the Bench Sludge Test (BST) which measures the ability of a dispersant to solublize particles in the oil. This test is conducted by heating the test oil mixed with a synthetic hydrocarbon blowby and diluent oil at a fixed temperature for a fixed time period. After heating, the turbidity of the resulting mixture is measured. A low percentage turbidity (0-10) is indicative of good dispersancy while an intermediate value (20-40) indicates intermediate dispersancy and a high value (20-100), increasingly poor dispersancy. The additives were tested at a 5 wt.% treating dosage in an SAE 10W-30 formulation and compared to good, fair and poor references (Table II).

**TABLE II**

| BENCH SLUDGE TEST | | | | |
|---|---|---|---|---|
| MATERIAL | BST RATING | OIL REFERENCES | | |
| | | GOOD | FAIR | POOR |
| Example I | 22.0 | 17.4 | 30.2 | 48.0 |
| Example II | 63.0 | 13.0 | 26.0 | 40.0 |

The lubricating oil containing the additive of Example I exhibited a very effective level of dispersancy in comparison to the standard reference oils.

The fully formulated lubricating oil composition was tested in the MWM-B single cylinder diesel engine test both with an without the additive of the invention. Motor Oil A designates the diesel engine oil and Motor Oil B designates the same oil containing 2 weight percent of the additive of Example I. The ratings are based on a value of 100 assigned to a new unused piston. The results are given in the table below.

**TABLE III**

| EFFECT OF THE ANTIOXIDANT ON ENGINE OIL PERFORMANCE | |
|---|---|
| Oil | Piston Cleanliness Rating (1) |
| Motor Oil A | 58 merits |
| Motor Oil B | 66 merits |

| | |
|---|---|
| (1) The higher the value the cleaner the piston. | |

This test demonstrates that the additive containing oil of the invention provided a substantially cleaner piston in the diesel engine test.

## Claims

1. A method for preparing a lubricant additive composition which comprises
A. reacting (i) a homopolymer of an alpha-monoolefin having 2 to 10 carbon atoms, or a copolymer of ethylene with a C₃ to C₁₀ alpha monoolefin or a terpolymer thereof with a non-conjugated diene or triene, said polymer substrate having an average molecular weight of 300 to 3500, with (ii) at least one olefinic carboxylic acid acylating agent to form one or more acylating reaction intermediates having a carboxylic acid acylating function within their structure, and
B. reacting the reaction intermediate from (A) with an amino-aromatic polyamine compound selected from
a) an N-arylphenylenediamine of the formula: 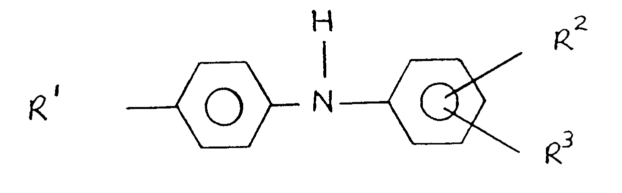 in which R¹ is hydrogen, -NH-aryl, NH-arylalkyl, or a branched or straight chain alkyl, alkenyl, alkoxyl, aralkyl, alkaryl, hydroxyalkyl or aminoalkyl radical having from 4 to 24 carbon atoms; R² is
NH₂, CH₂-(CH₂)ₙ-NH₂, ⁅NH-(CH₂)ₙ⁆ₘNH₂ or CH₂-aryl-NH₂ in which m and n are each 1 to 10; and R³ is alkyl, alkenyl, alkoxyl, aralkyl or alkaryl having 4 to 24 carbon atoms, or a phenylenediamine selected from N-phenyl - 1,4-phenylene diamine, N-phenyl - 1,3-phenylene diamine or N-phenyl - 1,2-phenylene diamine.
b) an aminothiazole selected from aminothiazole, aminobenzothiazole, aminobenzothiadiazole and aminoalkylthiazole,
c) an aminocarbazole of the formula: 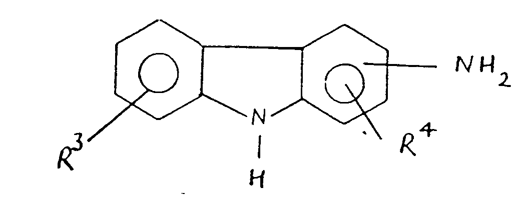 in which R³ and R⁴ are each hydrogen or an alkyl or alkenyl radical having from 1 to 14 carbon atoms,
d) an amino-indazolinone of the formula: 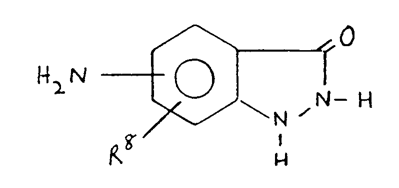 in which R⁸ is hydrogen or alkyl having 1 to 14 carbon atoms;
e) an aminomercaptotriazole of the formula: 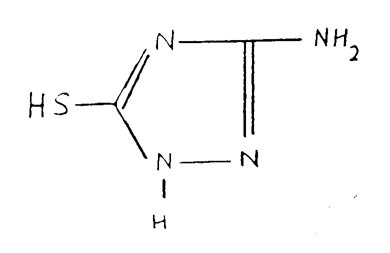 or
f) an aminoperimidine of the formula: 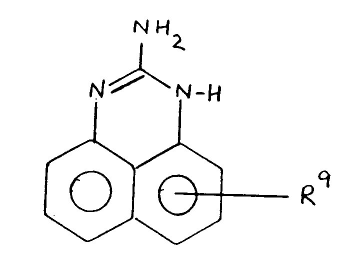 in which R⁹ is hydrogen or an alkyl, alkenyl, or alkoxyl radical having from 1 to 8 carbon atoms.

2. A method according to Claim 1 characterized in that the homopolymer or copolymer has an average molecular weight from 1000 to 2500.

3. A method according to Claim 1 characterized in that the homopolymer or copolymer has an average molecular weight from 1200 to 2000.

4. A method according to any one of Claims 1 to 3 characterized in that the olefinic carboxylic acid acylating agent is maleic anhydride.

5. A method according to any one of Claims 1 to 4 characterized in that the homopolymer or copolymer is polyisobutene, or a copolymer of 15 to 80 mole percent of ethylene and 20 to 85 mole percent of a C₃ to C₈ alpha-monoolefin.

6. A method according to any one of Claims 1 to 5 characterized in that the amino-aromatic polyamine compound is an N-aryl or N-alkyl substituted phenylenediamine selected from N-phenyl - 1,4-phenylene diamine, N-phenyl - 1,3-phenylene diamine or N-phenyl - 1,2-phenylene diamine.

7. A method according to any one of Claims 1 to 5 characterized in that the amino-aromatic polyamine compound is aminothiazole.

8. A lubricating oil composition which comprises a major amount of an oil of lubricating viscosity and a minor amount effective to impart viscosity index, dispersancy, and anti-oxidant properties to said oil of an additive composition, characterized in that the additive composition is prepared by a method according to any one of Claims 1 to 7.

9. A lubricating oil composition according to Claim 8 characterized by containing from 0.05 to 20 weight percent of said additive, based on the total weight of the oil composition.

10. A concentrate for a lubricating oil comprising a diluent oil of lubricant viscosity and from about 20 to 90 weight percent of an additive composition, based on the total weight of the concentrate, characterized in that the additive composition is prepared by a method according to any one of Claims 1 to 7.

## Patentansprüche

1. Ein Verfahren zur Herstellung einer Schmiermitteladditvzusammensetzung, welches umfaßt
A. Umsetzen von (i) einem Homopolymer eines Alpha-Monoolefins mit 2 bis 10 Kohlenstoffatomen oder eines Copolymers von Ethylen mit einem C₃-C₁₀-Alpha-Monoolefin oder eines Terpolymers davon mit einem nicht-konjugierten Dien oder Trien, wobei besagtes Polymersubstrat eine mittlere relative Molekülmasse von 300 bis 3.500 besitzt, mit (ii) wenigstens einem Acylierungsmittel auf der Basis einer olefinischen Carbonsäure, um ein oder mehrere Acylierungsreaktionszwischenprodukte mit einer Carbonsäure-Acylierungsfunktion in ihrer Struktur zu bilden, und
B. Umsetzen des Reaktionszwischenproduktes aus (A) mit einer aminoaromatischen Polyaminverbindung, ausgewählt aus
a) einem N-Arylphenylendiamin der Formel: 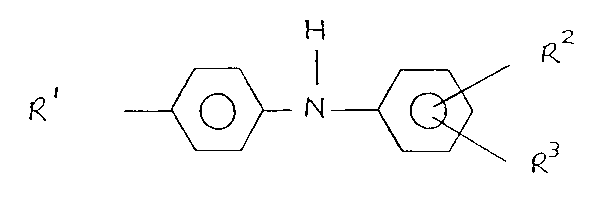 in der R¹ Wasserstoff, -NH-Aryl, NH-Arylalkyl oder ein verzweigter oder geradkettiger Alkyl-, Alkenyl-, Alkoxyl-, Aralkyl-, Alkaryl-, Hydroxyalkyl- oder Aminoalkylrest mit von 4 bis 24 Kohlenstoffatomen ist; R² NH₂, CH₂-(CH₂)ₙ-NH₂, ⁅NH-(CH₂)ₙ⁆ₘNH₂ oder CH₂-Aryl-NH₂ ist, wobei m und n jeweils 1 bis 10 sind; und R³ Alkyl, Alkenyl, Alkoxyl, Aralkyl oder Alkaryl mit 4 bis 24 Kohlenstoffatomen ist, oder ein Phenylendiamin, das ausgewählt ist aus N-Phenyl-1,4-phenylendiamin, N-Phenyl-1,3-phenylendiamin oder N-Phenyl-1,2-phenylendiamin,
b) einem Aminothiazol, das ausgewählt ist aus Aminothiazol, Aminobenzothiazol, Aminobenzothiadiazol und Aminoalkylthiazol,
c) einem Aminocarbazol der Formel: 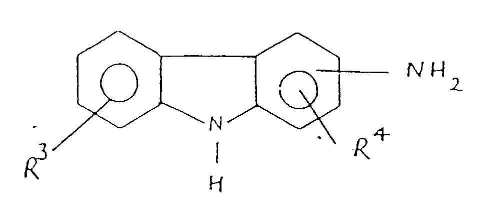 in der R³ und R⁴ jeweils Wasserstoff oder ein Alkyl- oder Alkenylrest mit von 1 bis 14 Kohlenstoffatomen sind,
d) einem Aminoindazolinon der Formel: 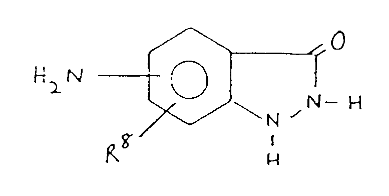 in der R⁸ Wasserstoff oder Alkyl mit 1 bis 14 Kohlenstoffatomen ist;
e) einem Aminomercaptotriazol der Formel: 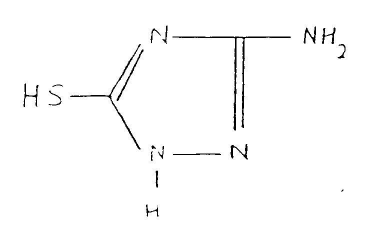 oder
f) einem Aminoperimidin der Formel: 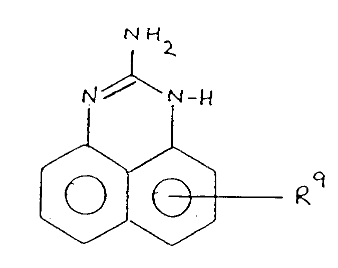 in der R⁹ Wasserstoff oder ein Alkyl-, Alkenyl- oder Alkoxylrest mit von 1 bis 8 Kohlenstoffatomen ist.

2. Ein Verfahren nach Anspruch 1, dadurch gekennzeichnet, daß das Homopolymer oder Copolymer eine mittlere relative Molekülmasse von 1.000 bis 2.500 besitzt.

3. Ein Verfahren nach Anspruch 1, dadurch gekennzeichnet, daß das Homopolymer oder Copolymer eine mittlere relative Molekülmasse von 1.200 bis 2.000 besitzt.

4. Ein Verfahren nach einem der Ansprüche 1 bis 3, dadurch gekennzeichnet, daß das Acylierungsmittel auf der Basis einer olefinischen Carbonsäure Maleinsäureanhydrid ist.

5. Ein Verfahren nach einem der Ansprüche 1 bis 4, dadurch gekennzeichnet, daß das Homopolymer oder Copolymer Polyisobuten oder ein Copolymer mit 15 bis 80 Molprozent Ethylen und 20 bis 85 Molprozent eines C₃-C₈-Alpha-Monoolefins ist.

6. Ein Verfahren nach einem der Ansprüche 1 bis 5, dadurch gekennzeichnet, daß die aminoaromatische Polyaminverbindung ein N-Aryl- oder N-Alkyl-substituiertes Phenylendiamin ist, das ausgewählt ist aus N-Phenyl-1,4-phenylendiamin, N-Phenyl-1,3-phenylendiamin oder N-Phenyl-1,2-phenylendiamin.

7. Ein Verfahren nach einem der Ansprüche 1 bis 5, dadurch gekennzeichnet, daß die aminoaromatische Polyaminverbindung Aminothiazol ist.

8. Eine Schmierölzusammensetzung, die eine Hauptmenge eines Öls mit Schmierviskosität und eine Nebenmenge umfaßt, die darin wirksam ist, besagtem Öl einer Additivzusammensetzung Viskositätsindex-, Dispergierfähigkeits-, und Antioxidationseigenschaften zu verleihen, dadurch gekennzeichnet, daß die Additivzusammensetzung mit einem Verfahren nach einem der Ansprüche 1 bis 7 hergestellt ist.

9. Eine Schmierölzusammensetzung nach Anspruch 8, dadurch gekennzeichnet, daß sie von 0,05 bis 20 Gew.-% von besagten Additiv enthält, bezogen auf das Gesamtgewicht der Ölzusammensetzung.

10. Ein Konzentrat für ein Schmieröl, daß ein Verdünnungsöl mit Schmierviskosität und von etwa 20 bis 90 Gew.-% einer Additivzusammensetzung, bezogen auf das Gesamtgewicht des Konzentrats, umfaßt, dadurch gekennzeichnet, daß die Additivzusaammensetzung mit einem Verfahren nach einem der Ansprüche 1 bis 7 hergestellt ist.

## Revendications

1. Procédé pour préparer une composition d'additif pour lubrifiant, qui comprend
A. la réaction (i) d'un homopolymère d'une alphamono-oléfine ayant 2 à 10 atomes de carbone ou d'un copolymère de l'éthylène avec une alphamono-oléfine en C₃ à C₁₀ ou d'un terpolymère de ceux-ci avec un diène ou triène non conjugué, ledit substrat polymère ayant un poids moléculaire moyen de 300 à 3500, avec (ii) au moins un agent acylant acide carboxylique oléfinique, pour former un ou plusieurs produits de réaction acylants intermédiaires ayant une fonction acylante d'acide carboxylique dans leur structure, et
B. la réaction du produit de réaction intermédiaire de (A) avec un composé polyamine aminoaromatique choisi parmi
a) une N-arylphénylènediamine de formule : 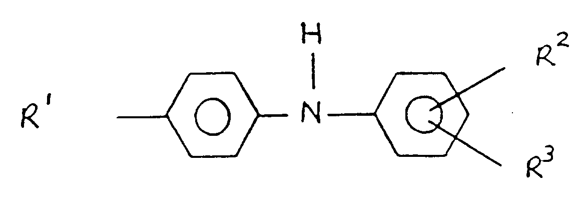 où R¹ est un hydrogène, un radical -NH-aryle, NH-arylalkyle ou un radical alkyle, alcényle, alcoxyle, aralkyle, alkaryle, hydroxyalkyle ou aminoalkyle à chaîne ramifiée ou linéaire ayant de 4 à 24 atomes de carbone ; R² est NH₂, CH₂-(CH₂)ₙ-NH₂, ⁅NH - (CH₂)ₙ⁆ₘ NH₂,
ou CH₂-aryl-NH₂ où m et n sont chacun 1 à 10 ; et R³ est un radical alkyle, alcényle, alcoxyle, aralkyle ou alkaryle ayant 4 à 24 atomes de carbone, ou une phénylènediamine choisie parmi la N-phényl-1,4-phénylènediamine, la N-phényl-1,3-phénylènediamine et la N-phényl-1,2-phénylènediamine,
b) un aminothiazole choisi parmi l'aminothiazole, l'aminobenzothiazole, l'aminobenzothiadiazole et un aminoalkylthiazole,
c) un aminocarbazole de formule : 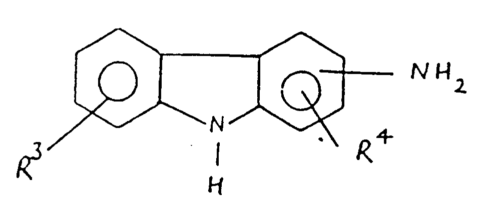 où R³ et R⁴ sont chacun de l'hydrogène ou un radical alkyle ou alcényle ayant de 1 à 14 atomes de carbone,
d) une amino-indazolinone de formule : 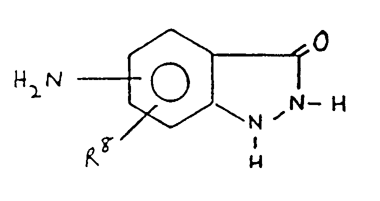 où R⁸ est un hydrogène ou un radical alkyle ayant 1 à 14 atomes de carbone :
e) un aminomercaptotriazole de formule : 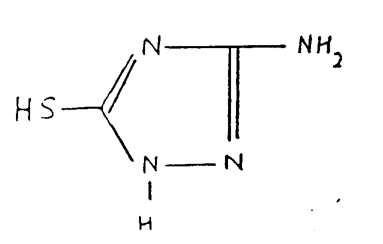 ou
f) une aminopérimidine de formule : 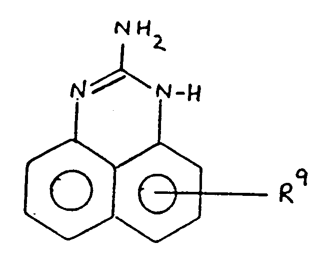 où R⁹ est un hydrogène ou un radical alkyle, alcényle ou alcoxyle ayant de 1 à 8 atomes de carbone.

2. Procédé selon la revendication 1, caractérisé en ce que l'homopolymère ou copolymère a un poids moléculaire moyen de 1000 à 2500.

3. Procédé selon la revendication 1, caractérisé en ce que l'homopolymère ou copolymère a un poids moléculaire moyen de 1200 à 2000.

4. Procédé selon l'une quelconque des revendications 1 à 3, caractérisé en ce que l'agent acylant acide carboxylique oléfinique est l'anhydride maléique.

5. Procédé selon l'une quelconque des revendications 1 à 4, caractérisé en ce que l'homopolymère ou copolymère est un polyisobutène ou un copolymère de 15 à 80 % en moles d'éthylène et de 20 à 85 % en moles d'une alpha-mono-oléfine en C₃ à C₈.

6. Procédé selon l'une quelconque des revendications 1 à 5, caractérisé en ce que le composé polyamine aminoaromatique est une phénylènediamine substituée par des radicaux N-aryles ou N-alkyles, choisie parmi la N-phényl-1,4-phénylènediamine, la N-phényl-1,3-phénylènediamine et la N-phényl-1,2-phénylènediamine.

7. Procédé selon l'une quelconque des revendications 1 à 5, caractérisé en ce que le composé polyamine aminoaromatique est l'aminothiazole.

8. Composition d'huile lubrifiante, qui comprend une quantité majeure d'une huile de viscosité lubrifiante et une quantité mineure, efficace pour conférer un indice de viscosité, de la dispersabilité et des propriétés antioxydantes à ladite huile, d'une composition d'additif, caractérisée en ce que la composition d'additif est préparée par un procédé selon l'une quelconque des revendications 1 à 7.

9. Composition d'huile lubrifiante selon la revendication 8, caractérisée en ce qu'elle contient de 0,05 à 20 % en poids dudit additif, sur la base du poids total de la composition d'huile.

10. Concentré pour huile lubrifiante, comprenant une huile diluante de viscosité lubrifiante et d'environ 20 à 90 % en poids d'une composition d'additif, sur la base du poids total du concentré, caractérisé en ce que la composition d'additif est préparée par un procédé selon l'une quelconque des revendications 1 à 7.
